# EUROPÄISCHE PATENTSCHRIFT

(11) **EP 1 692 921 B1**
(45) Veröffentlichungstag und Bekanntmachung des Hinweises auf die Patenterteilung: **01.04.2009**
(21) Anmeldenummer: 04819703.2
(22) Anmeldetag: 02.12.2004
(51) Int. Cl.: H05B 3/42, A47J 31/54, A47L 15/42, D06F 39/04, F24H 1/10, H01C 7/02

(54) **HEIZVORRICHTUNG FÜR FLUIDE UND DURCHLAUFERHITZER**
FLUID HEATING DEVICE AND CONTINUOUS FLOW HEATER
DISPOSITIF DE CHAUFFAGE DESTINE A DES FLUIDES ET CHAUFFE-EAU INSTANTANE

(30) Priorität: 04.12.2003 DE 10356790
(43) Veröffentlichungstag der Anmeldung: 23.08.2006
(73) Patentinhaber: BSH Bosch und Siemens Hausgeräte GmbH, 81739 München (DE)
(72) Erfinder: STICKEL, Martin, 89537 Giengen (DE)
(86) Internationale Anmeldenummer: PCT/EP2004/053248
(87) Internationale Veröffentlichungsnummer: WO 2005/055665

(56) Entgegenhaltungen:
- EP-A- 1 532 919
- DE-A1- 19 852 888
- DE-U- 7 132 663
- US-A- 4 334 141
- US-B1- 6 442 341

## Beschreibung

Die Anmeldung betrifft eine Heizvorrichtung für Fluide zum Einbau in einen Durchlauferhitzer mit zumindest einem als elektrische Widerstandsheizung ausgeführten Heizelement, mindestens einem Wärmeübertragungselement, das zum Übertragen der von dem Heizelement erzeugten Wärme an das Fluid mit dem Heizelement und dem Fluid in wärmeleitender Verbindung steht. Die Anmeldung betrifft weiterhin einen Durchlauferhitzer mit einer Heizvorrichtung der vorgenannten Art.

Heizvorrichtungen und Durchlauferhitzer der genannten Art werden beispielsweise in Geschirrspülmaschinen oder Waschmaschinen eingesetzt. Zur Erwärmung des Fluids werden heute überwiegend auf Rohrheizkörpern basierende Heizvorrichtungen verwendet. Rohrheizkörper bestehen üblicherweise aus einem Widerstandsdraht, der mittig in einem Edelstahlrohr angeordnet ist, so dass keine Spannungsdurchschläge auf dieses möglich sind. Zur genauen Fixierung des Widerstandsdrahtes in der Mitte des Rohres und zur Verbesserung der Isolation wird der Raum zwischen dem Widerstandsdraht und dem Edelstahlrohr mit einem isolationsfesten Material, in der Regel einem Magnesiumoxid-Pulver, ausgefüllt.

Der Einsatz von Rohrheizkörpern kann auf unterschiedliche Weise erfolgen. So kann dieser beispielsweise in einem von dem Fluid durchströmten Durchlauferhitzer, im Fluidstrom liegend, angeordnet sein. Der Rohrheizkörper kann auch auf einem von dem Fluid durchströmten Fluidführungsrohr, gegebenenfalls unter Zwischenschaltung eines Wärmeübertragungselements, angeordnet sein. Eine weitere einfache Variante sieht vor, den Rohrheizkörper im Inneren eines Behälters liegend von dem Fluid umspülen zu lassen.

Allen beschriebenen Varianten ist gemeinsam, dass die Heizvorrichtung aufgrund der Bauart des Rohrheizkörpers eine gewisse Trägheit aufweist. Aufgrund geringer erzielbarer Flächenleistungen des Rohrheizkörpers resultieren hieraus große Bauteilabmessungen. Probleme ergeben sich ebenfalls häufig bei der Kontaktierung des Rohrheizkörpers und weiterer dazugehöriger Komponenten wie z.B. einem Schaltelement, das ein Trockenlaufen der Heizvorrichtung bzw. des Durchlauferhitzers verhindern soll.

Ein derartiger Durchlauferhitzer mit einem aufwendigen Dichtungssystem und einer integrierten Überwachungseinheit in Form eines Mikroschalters zum Schutz vor einem Trockenlaufen kann beispielsweise der DE 36 26 955 C2 entnommen werden.

Aus der DE 199 34 319 A1 ist weiterhin eine Heizvorrichtung für Fluide mit zumindest einem als elektrische Widerstandsheizung ausgeführten Heizelement bekannt, die ein Wärmeübertragungselement aufweist, das zum Übertragen der von dem Heizelement erzeugten Wärme an das Fluid mit dem Heizelement und dem Fluid in wärmeleitender Verbindung steht. Bei der dort beschriebenen Heizvorrichtung handelt es sich um ein Fluidführungsrohr, auf dessen Außenseite das Heizelement in Form eines Dickschichtelementes aufgebracht ist. Die Ausgestaltung des Durchlauferhitzers in Form eines Fluidführungsrohrs weist einerseits den Nachteil großer Abmaße und andererseits eine beträchtliche Unflexibilität hinsichtlich der elektrischen Anschlüsse sowie der Anordnung des Fluideinlasses bzw. Fluidauslasses auf.

Aus der US 6,442,341 B1 ist eine Heizvorrichtung für den Einsatz in Kaffeemaschinen bekannt, die aus einem extruierten Grundkörper mit einem Flüssigkeitsdurchgang und einem Aufnahmeraum für eine Heizung gebildet ist.

Aus der DE 198 52 888 A1 ist ebenfalls eine Einrichtung für ein wassererhitzendes Haushaltsgerät bekannt, wie beispielsweise einer Kaffee- oder Teemaschine oder Wasserkocher. Ein Heizstab ist u-förmig gebogen und steht mit einem entsprechend geformten Wasserrohr in Wärmekontakt. Ferner ist eine Wärmehalteplatte vorgesehen, die ebenfalls thermisch mit dem Heizstab gekoppelt ist.

Aus der DE 17 32 663 ist ebenfalls eine Heizeinrichtung insb. für Kaffeemaschinen bekannt, die einen ringförmig gebogenen Rohrheizkörper, sowie ein mit dem Rohrheizkörper in Wärmekontakt stehendes Außenrohr aufweist.

Schließlich ist aus der US 4,334,141 eine Heizeinrichtung für den Einsatz in Kaffeemaschinen oder ähnlichen Geräten bekannt, die eine Vielzahl von quaderförmigen Wärmeübertragungselementen aufweist, an deren Verbindungsseiten Heizelemente angeordnet sind, wobei eine zu erwärmende Flüssigkeit führende Leitung schlangenförmig durch eine Mehrzahl der quaderförmigen Wärmeübertragungselemente geführt ist.

Aus der EP 1 532 919 A1 ist eine Heizvorrichtung für Fluide zum Einbau in einen Durchlauferhitzer mit zumindest einem als elektrische Widerstandsheizung ausgeführten Heizelement, mindestens einem Wärmeübertragungselement, das zum Übertragen der von dem Heizelement erzeugten Wärme an das Fluid mit dem Heizelement und dem Fluid in wärmeleitender Verbindung steht. Das Wärmeübertragungselement bildet einen integralen Gehäusebestandteil eines druck- und temperaturbeständigen Durchlauferhitzers und weist einen im wesentlichen planaren Zentralbereich auf, auf den das Heizelement (2) aufgebracht ist.

Es ist daher Aufgabe der vorliegenden Erfindung, eine Heizvorrichtung und einen Durchlauferhitzer anzugeben, die bei einem einfachen und kostengünstigen Aufbau eine energiesparende Erhitzung des Fluids erlauben.

Diese Aufgaben werden durch eine Heizvorrichtung mit den Merkmalen des Patentanspruches 1 und durch einen Durchlauferhitzer mit den Merkmalen des Patentanspruches 10 gelöst. Vorteilhafte Ausgestaltungen ergeben sich jeweils aus den abhängigen Patentansprüchen.

Im Gegensatz zur DE 199 34 319 A1, bei der die Heizvorrichtung den Durchlauferhitzer bildet, bildet bei der Erfindung das Wärmeübertragungselement der gattungsgemäßen Heizvorrichtung einen integralen Gehäusebestandteil eines druck- und temperaturbeständigen Durchlauferhitzers und weist einen im wesentlichen planaren Zentralbereich auf, auf den das Heizelement aufgebracht ist. Die Heizvorrichtung, bestehend aus dem Heizelement und dem Wärmeübertragungselement ist damit lediglich ein Bestandteil eines Durchlauferhitzers, der zumindest einen weiteren Bestandteil aufweist.

Um ein abgeschlossenes Heizsystem zu bilden, das in Form eines Durchlauferhitzers ausgebildet ist, ist die erfindungsgemäße Heizvorrichtung mit einem Formteil druck- und temperaturstabil verbunden, um einen Fluidraum zu bilden. Das Formteil weist zumindest eine Einlassöffnung und zumindest eine Auslassöffnung auf. Weiter ist vorgesehen, das Heizelement außerhalb des Fluidraums auf dem Wärmeübertragungselement anzuordnen. Das Gesamtsystem des Durchlauferhitzers besteht damit aus zumindest zwei Komponenten, nämlich der erfindungsgemäßen Heizplatte und einem mit diesem verbundenen Formteil, das auch als Gehäuse bezeichnet wird.

Der Umstand, dass das Wärmeübertragungselement einen im wesentlichen planaren Zentralbereich aufweist, auf den das Heizelement in Form einer elektrischen Widerstandsheizung, z.B. einem Dickschichtelement, aufgebracht ist, weist den Vorteil einer einfachen Fertigung auf. Das Heizelement ist auf dem Wärmeübertragungselement angebracht oder auf diesem aufgetragen. Ein derartiges Heizelement umfasst üblicherweise eine Widerstandsheizbahn, die (beispielsweise durch Drucken oder Flammspritzen) auf ein isolierendes Substrat, z.B. aus Glas, Keramik oder einer Glaskeramik, gelegt ist, welches selbst auf dem Wärmeübertragungselement vorgesehen ist. Bei der Herstellung eines gedruckten Heizelementes wird das isolierende Substrat zunächst auf den Zentralbereich der Heizvorrichtung in einer Abfolge von Druck- und Heizschritten gelegt. Anschließend wird die Widerstandsheizung auf diese Schicht z.B. durch einen Film- bzw. Siebdruck aufgebracht und weiter erhitzt. Die Fertigung ist deshalb besonders einfach, da der Zentralbereich im wesentlichen planar ausgebildet ist. Bei der in der DE 199 34 319 A1 offenbarten Anordnung hingegen muss die elektrische Widerstandsheizung auf eine gekrümmte Oberfläche aufgebracht werden, was die Herstellung erschwert.

Bei einer erfindungsgemäßen Heizvorrichtung kann gegenüber der Verwendung eines Rohrheizkörpers die Dicke des Wärmeübertragungselementes verringert werden, so dass die Wärmeübertragung durch dieses zu dem Fluid hin verbessert wird. Dies hat den Vorteil, dass die Temperatur der elektrischen Widerstandsheizung reduziert werden kann, da auch die Wärme effizienter weg von dieser zu dem Fluid geleitet wird. Die Verringerung der Temperatur der elektrischen Widerstandsheizung erlaubt es, bei einer gegebenen maximalen erlaubten Temperatur die Leistungsdichte der Heizvorrichtung zu erhöhen und somit deren Größe zu verringern. Die Heizvorrichtung wird vorzugsweise, da diese druck- und temperaturstabil mit einem Formteil zu einem Durchlauferhitzer zusammengefügt werden soll, kreisförmig ausgebildet. In diesem Fall ist es möglich, den Durchmesser zu verringern. Dies bedeutet einerseits eine Kosteneinsparung und andererseits eine Erhöhung der Zuverlässigkeit, da, je kleiner der Durchmesser der Heizvorrichtung ist, diese umso leichter die entstehenden Drücke aushalten kann.

Erfindungsgemäß ist das Material der elektrischen Widerstandsheizung ist ein Material, das einen Widerstand mit positivem Temperaturkoeffizienten aufweist. Dies bedeutet, dass die elektrische Widerstandsheizung bis zu einem gewissen Maße eine Überhitzung begrenzt, falls der Fluidraum trocken läuft oder trocken angeschaltet wird. Ein solches Material ist beispielsweise Nickel.

Vorzugsweise weist das Heizelement eine Anzahl an elektrisch miteinander verbundenen Heizabschnitten auf, die den Zentralbereich im wesentlichen vollflächig bedecken, wobei jedoch ein Montagebereich durch die Heizabschnitte ausgespart bleibt. Die möglichst vollflächige Bedeckung des Zentralbereiches des Wärmeübertragungselementes mit dem Heizelement ermöglicht minimale Abmaße der Heizvorrichtung. Die elektrisch miteinander verbundenen Heizabschnitte sind bevorzugt in der Form konzentrischer Kreissegmente ausgebildet. Die gegenüberliegenden Enden jeweiliger Kreissegmente sind dabei derart voneinander beabstandet, dass ein Montagebereich gebildet werden kann. Benachbarte Enden der Kreissegmente können beispielsweise durch ein elektrisch leitfähiges Material in Form von Leiterzügen miteinander verbunden werden. Das Ausbilden des Heizelementes in Form einer Mehrzahl von Heizabschnitten und deren wahlweise elektrische Verbindung ermöglicht insbesondere eine flexible Führung der Anschlussenden des Heizelementes. Die Heizabschnitte müssen nicht notwendigerweise die Form konzentrischer Kreissegmente aufweisen. Denkbar wäre natürlich auch eine spiralförmiger Verlauf. Die Wahl, auf welche Weise die Heizabschnitte geformt werden (gerade, viereckig, gebogen) wird im wesentlichen von der Form der Heizvorrichtung und insbesondere des Wärmeübertragungselementes abhängig sein.

Während Rohrheizkörper prinzipbedingt lediglich in einer Leistungsstufe realisiert werden können, d.h. zur gleichzeitigen Realisierung von zwei unterschiedlichen Heizstufen zwei Rohrheizkörper in einen Durchlauferhitzer verbaut werden müssen, kann das Heizelement der erfindungsgemäßen Heizvorrichtung durch elektrische Verbindung entsprechender Heizabschnitte auch mehr als einen Heizkreis aufweisen.

In einer weiteren vorteilhaften Ausgestaltung ist eine auf dem Wärmeübertragungselement angeordnete Temperaturüberwachungseinrichtung vorgesehen, die mit dem Wärmeübertragungselement gut leitend verbunden ist. Vorzugsweise ist das Temperaturüberwachungselement in den Montagebereich benachbart zu dem Heizelement angeordnet. Im Gegensatz zu der in der DE 199 34 319 A1 vorgeschlagenen Anordnung, bei der die Temperaturüberwachungseinrichtung gut wärmeleitend mit dem Heizelement verbunden sein soll, ist dies bei der vorliegenden Erfindung gerade nicht erwünscht. Aus diesem Grunde wird das Temperaturüberwachungselement bevorzugt in dem Montagebereich, welcher keine Heizabschnitte aufweist, angeordnet. Im wesentlichen dient die Temperaturüberwachungseinrichtung dazu, die Fluidtemperatur zu erfassen. Aus dieser kann dann ein indirekter Rückschluss auf das Verhalten des Heizleiters geschlossen werden.

Zur Vermeidung einer Beeinflussung der Temperaturüberwachungseinrichtung durch das Heizelement besteht das Wärmeübertragungselement bevorzugt aus einem Material, welches in lateraler Richtung schlecht wärmeleitend ist. In einer Richtung, die senkrecht dazu ist, weist das Wärmeübertragungselement hingegen eine gute Wärmeleitfähigkeit auf, wodurch einerseits eine effektive Erhitzung des Fluids gewährleistet ist und andererseits ein unmittelbarer Rückschluss von der Fluidtemperatur auf die Temperaturüberwachungseinrichtung möglich ist. Als Material für das Wärmeübertragungselement kommt insbesondere rostfreier Stahl in Betracht.

Das Temperaturüberwachungselement ist bevorzugt durch einen NTC-Widerstand gebildet. Dieser ermöglicht die Auswertung seines Signals durch eine einfache Elektronik, da er bereits bei kleineren Temperaturschwankungen größere Widerstandsänderungen aufweist. Ein NTC-Widerstand lässt sich darüber hinaus auf einfache Weise als oberflächenmontierbares Bauelement auf das Wärmeübertragungselement aufbringen.

Es ist weiter bevorzugt, eine auf dem Wärmeübertragungselement angeordnete Kontaktiervorrichtung vorzusehen, die mit den elektrischen Elementen der Heizvorrichtung elektrisch verbunden ist. Die elektrischen Elemente sind einerseits das Heizelement und andererseits die Temperaturüberwachungseinrichtung. Es ist dabei unerheblich, ob das Heizelement eine Mehrzahl an Heizkreisen aufweist. Sämtliche elektrischen Anschlussenden des Heizelementes sowie die elektrischen Kontakte der Temperaturüberwachungseinrichtung sind mit einer auf dem Wärmeübertragungselement, insbesondere in dem Montagebereich, angeordneten Kontaktiereinrichtung elektrisch verbunden. Damit kann durch einen einzigen Steckkontakt die Heizvorrichtung an die elektrische Stromversorgung angeschlossen werden und auch sämtliche zur Überwachung der Heizvorrichtung notwendigen elektrischen Verbraucher sind über diese Kontaktiervorrichtung kontaktierbar.

Wie weiter oben bereits beschrieben, weist der erfindungsgemäße Durchlauferhitzer neben der Heizvorrichtung zumindest ein Formteil auf, das zumindest eine Einlassöffnung und zumindest eine Auslassöffnung aufweist. Es ist dabei bevorzugt, das Temperaturüberwachungselement auf dem Wärmeübertragungselement der Heizvorrichtung in einem Bereich anzuordnen, der nahe der Einlassöffnung in dem Formteil gelegen ist. Hierdurch ist es auf besonders einfache Weise möglich, die Fluidtemperatur des dem Durchlauferhitzer zuströmenden Fluids präzise zu erfassen.

Nachstehend werden weitere vorteilhafte Ausgestaltungen sowie Ausführungsbeispiele der erfindungsgemäßen Heizvorrichtung sowie des erfindungsgemäßen Durchlauferhitzers beschrieben. Hierbei zeigen:
- Figur 1: eine Draufsicht auf die Außenfläche einer erfindungsgemäßen Heizvorrichtung,
- Figur 2: einen Schnitt durch die Heizvorrichtung aus Figur 1 längs der Linie A-A,
- Figur 3: eine Seitenansicht der erfindungsgemäßen Heizvorrichtung, wobei diese in ihrer späteren Einbaulage, mit der Außenfläche nach unten, dargestellt ist,
- Figur 4: eine Detailansicht des in Figur 2 gestrichelt umrandeten Randes der Heizvorrichtung, und
- Figur 5: eine Perspektivansicht eines erfindungsgemäßen aus einer Heizvorrichtung und einem Formteil zusammengesetzten Durchlauferhitzers.

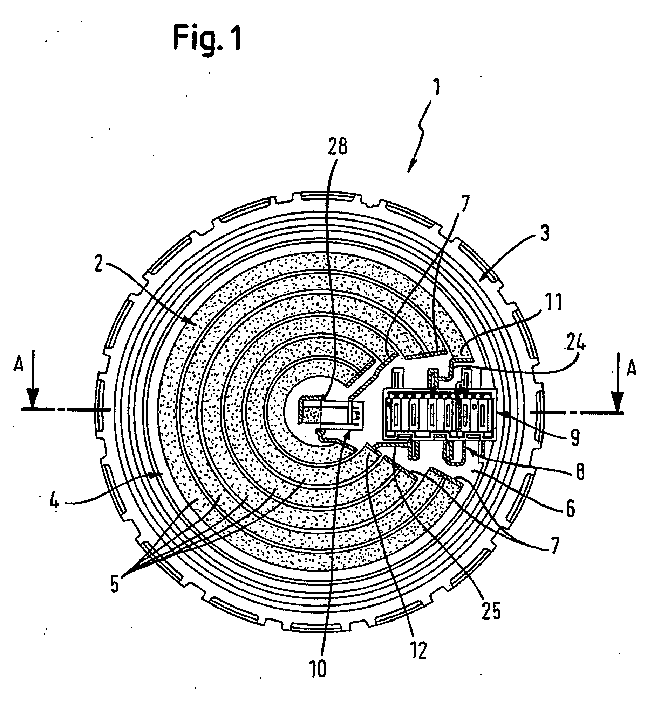

Unter Bezugnahme auf die Figuren 1 bis 4 wird nachfolgend eine erfindungsgemäße Heizvorrichtung beschrieben.

Figur 1 zeigt eine erfindungsgemäße Heizvorrichtung 1 in einer Draufsicht auf deren Außenfläche 14. Die Heizvorrichtung 1 weist eine im wesentlichen kreisförmige Gestalt auf. Auf einem Zentralbereich 4 eines Wärmeübertragungselementes 3, z.B. aus einem rostfreien Stahl, ist ein Heizelement 2 angeordnet. Das Heizelement 2 besteht beispielhaft aus insgesamt sieben kreisförmigen konzentrischen Kreissegmenten, die jeweils einen Heizabschnitt 5 bilden. Die Heizabschnitte 5 sind derart zueinander angeordnet, dass benachbarte Enden der Kreissegmente über eine kurze Leiterbahn 7 elektrisch miteinander in Verbindung gebracht sind. Der in diesem Fall einzige Heizkreis erstreckt sich damit von einem Anschlussende 11 über den äußersten konzentrischen Ring und jeden der weiteren konzentrischen Ringe bis zu einem weiteren Anschlussende 12.

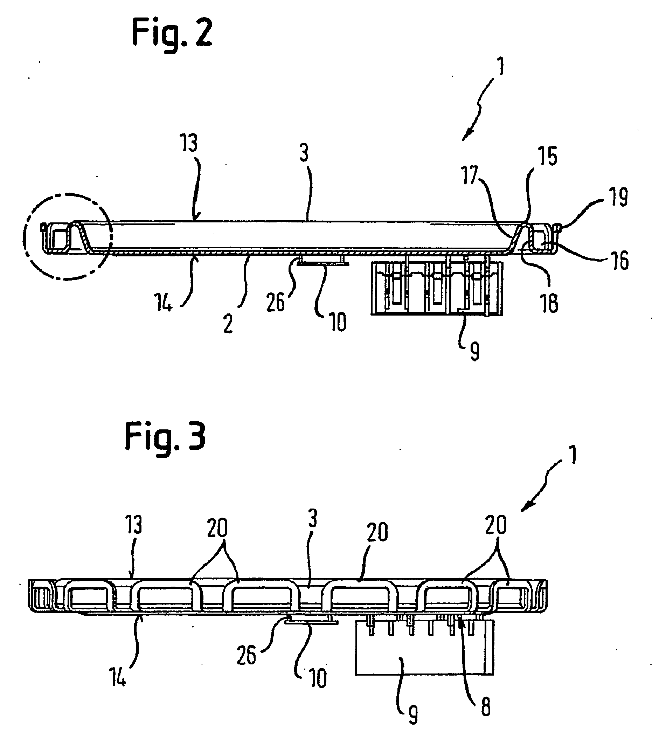

Das Heizelement 2 der vorliegenden Heizvorrichtung 1 weist einen einzigen Heizkreis auf. Mit anderen Worten sind sämtliche Heizabschnitte 5 des Heizelementes 2 seriell miteinander durch entsprechende Leiterbahnabschnitte 7 verbunden. Bestandteil dieses Heizkreises ist auch eine Schmelzsicherung 10, die sich im wesentlichen im Zentrum des Zentralbereiches 4 befindet, in dem die Heizsegmente 5 die geringsten Radien aufweisen, und besser aus den Querschnittsdarstellungen der Figuren 2 und 3 ersichtlich ist. Die Figuren 2 und 3 zeigen die Heizvorrichtung 1 in ihrer späteren Einbaulage, z.B. in einer Geschirrspülmaschine oder einer Waschmaschine. Die Einbaulage ist derart definiert, dass die Außenfläche 14, auf der sich das Heizelement 2, die Schmelzsicherung 10, ein weiteres und später beschriebenes Temperaturüberwachungselement 8 sowie die Kontaktiervorrichtung 9 befinden, nach unten gewandt sind. Die Innenfläche 13, die in Kontakt mit dem Fluid gerät, ist hingegen nach oben angeordnet. Die Schmelzsicherung 10 soll im Falle eines Trockengehens der Heizvorrichtung eine Beschädigung des Heizelementes 2 verhindern, indem Anschlussenden 26 der Schmelzsicherung 10 an Kontaktstellen 28, die mit der Leiterbahn 7 des Heizkreises über ein Lot verbunden sind, schmelzen. Durch die kleinen Radien der Heizsegmente entstehen in diesem Bereich Stromkonzentrationen, die das Auslösen der Schmelzsicherung begünstigen. Aufgrund seiner Einbaulage kann das Auftrennen der Kontaktstellen 28 im Falle eines Schmelzen des Lotes durch die Schwerkraft unterstützt werden.

Das Wärmeübertragungselement ist aus einem Metall, beispielsweise einem rostfreien Stahl gefertigt, welches in lateraler Richtung eine schlechte Wärmeleitfähigkeit aufweist. Senkrecht dazu, d.h. in einer Ebene senkrecht zur Zeichenebene, weist das Wärmeübertragungselement hingegen eine gute Wärmeleitfähigkeit auf, so dass eine effektive Übertragung der von dem Heizelement erzeugten Energie an das Fluid sichergestellt ist.

Während das Heizelement, d.h. die als elektrische Widerstandsheizung ausgebildete Heizabschnitte einen positiven Temperaturkoeffizienten aufweisen, ist in einem Montagebereich 6 ein Temperaturüberwachungselement 8 mit einem negativen Temperaturkoeffizienten vorgesehen. Die Temperaturüberwachungseinrichtung 8, die beispielsweise als NTC-Widerstand ausgebildet ist, erfasst aufgrund der Eigenschaften des Wärmeübertragungselementes 3 lediglich die Temperatur des die Innenfläche 13 umspülenden Fluids, jedoch nicht die von dem Heizelement 2 erzeugte Wärme. Die Temperaturüberwachungseinrichtung 8 ist somit von dem Heizelement entkoppelt. Trotz der thermischen Entkoppelung der Temperaturüberwachungseinrichtung von dem Heizelement kann auf das Verhalten des Heizelementes geschlossen werden, indem die die Innenseite des Wärmeübertragungselementes umspülende Fluidtemperatur erfasst und ausgewertet wird. Die Verwendung eines NTC-Widerstands als Temperaturüberwachungseinrichtung weist den Vorteil auf, dass die Auswertung des gelieferten Signals, verglichen mit einem PTC-Widerstand sehr viel einfacher möglich ist. Ein PTC-Widerstand benötigt im Gegensatz zu einem NTC-Widerstand nämlich starke Temperaturgradienten, um eine ausreichende Änderung des Widerstandes detektieren zu können.

In dem Montagebereich 6, der durch das Heizelement 2 in dem Zentralbereich 3 des Wärmeübertragungselementes 3 ausgespart ist, ist auch eine Kontaktiervorrichtung 9 angeordnet. Mit der Kontaktiervorrichtung 9 sind die Anschlussenden 11 und 12 des Heizelementes 2 über jeweilige Leiterbahnen 24 und 25 elektrisch verbunden. Die Kontaktiervorrichtung 9 weist in ihrem Inneren entsprechende Kontaktzungen auf, über die sie mit einem entsprechend ausgebildeten Stecker mechanisch und elektrisch verbunden werden kann. Über die Kontaktiervorrichtung 9 wird dem Heizelement 9 die notwendige Spannung und der notwendige Strom zugeführt.

Die Temperaturüberwachungseinrichtung ist in unmittelbarer Nähe der Kontaktiereinrichtung 9 angeordnet und mit dieser elektrisch verbunden. Damit können über die Kontaktiereinrichtung sämtliche in der Heizvorrichtung vorgesehenen elektrischen Verbraucher über einen einzigen Steckkontakt kontaktiert werden.

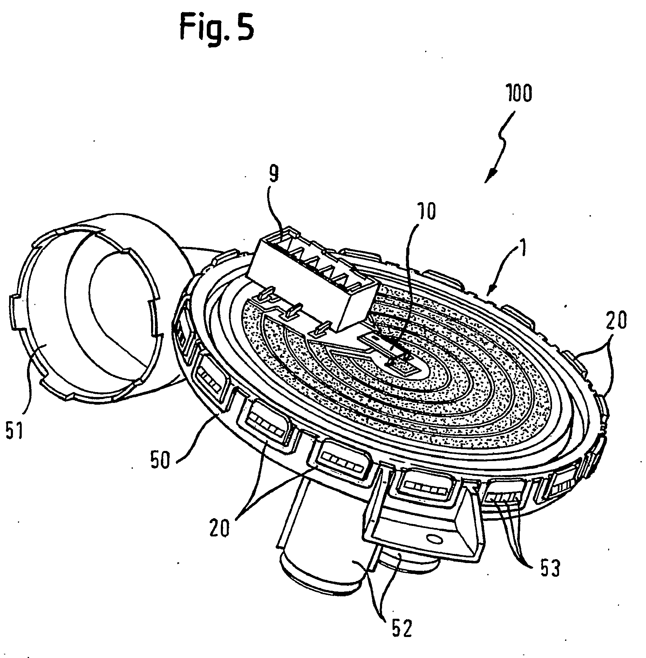

Aus der Querschnittsdarstellung der Figur 2, die einen Schnitt entlang der Linie A-A aus Figur 1 zeigt, und der Seitenansicht der Figur 3 wird das Design der Wärmeübertragungseinrichtung 3 besser deutlich. Der Zentralbereich 4 wird von einem umlaufenden Rand 15 umgeben. Der Rand 15 wird durch eine Wandung 17, die sich von dem Zentralbereich 4 in einem Winkel nach oben erstreckt, und einer Kanalwand 18, die von dem Rand 15 nach unten verläuft, gebildet. Die Kanalwand 18 ist Teil eines Kanals 16, der weiter eine äußere Kanalwand 19 und einen Kanalboden 22 aufweist. Der Kanal 16, der den Zentralbereich außerhalb des Rands 15 umläuft, dient zur Aufnahme eines Wandabschnittes des Formteiles, um die Heizvorrichtung an dem Formteil druck- und temperaturstabil anzubringen. Die Kanalwand 19 ist mit einer Reihe von Laschen 20 gebildet, die zur Aufnahme von Rasthaken, die in dem Wandabschnitt des Formteils 50 eines erfindungsgemäßen Durchlauferhitzers 100 gebildet sind (Figur 5).

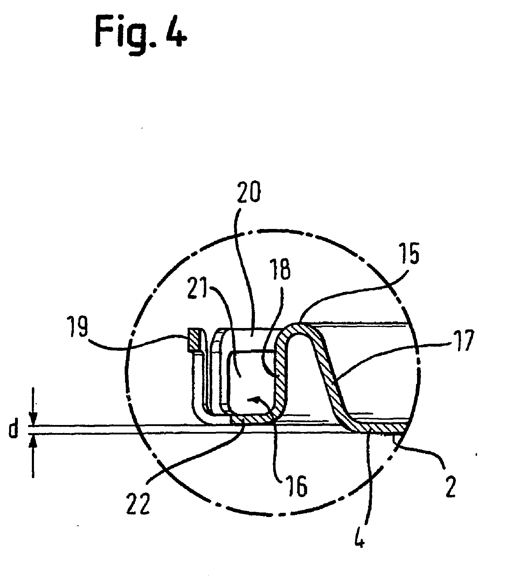

Wie aus der vergrößerten Detailansicht des Randes des Wärmeübertragungselements 3 der Figur 4 besser hervorgeht, sind die Kanalwände 18 und 19 im wesentlichen parallel zueinander und im wesentlichen senkrecht zu der von dem Zentralbereich 4 gebildeten Ebene angeordnet. Der Kanalboden erstreckt sich dabei keinesfalls unterhalb des Zentralbereiches 4. Der Abstand d ist deshalb im Grenzfall 0 oder, wie eingezeichnet, größer als 0. Dies ermöglicht es auf einfache Weise, auf die Außenfläche 14 des Zentralbereiches 4 das Heizelement 2, insbesondere die Heizabschnitte 5, in einem Druckverfahren aufzubringen.

Die Wandung 17, die in einem Winkel von dem Zentralbereich zu dem Rand 15 verläuft, könnte auch senkrecht zu dem Zentralbereich 4 ausgebildet sein und damit im wesentlichen parallel zu den Kanalwänden 18 und 19 verlaufen. Die Geometrie der Metallplatte kann beispielsweise durch einen Stanzvorgang, in dem die Laschen 20 ausgebildet werden, und eine Prägung geformt werden. Die innere Kanalwand 18 stellt einen Dichtsitz zur Verfügung, der eine radiale Abdichtung zwischen der Heizvorrichtung und dem Formteil erlaubt. Aufgrund der in den Figuren 2 bis 4 gezeigten Einbaulage der Heizvorrichtung, mit der Außenfläche 14 nach unten, bildet der Rand in Verbindung mit dem Kanal 16 außerdem eine Wassersperre, die verhindert, dass im Falle einer Undichtigkeit des Durchlauferhitzers das austretende Fluid auf das Heizelement 2 laufen kann. Der Kanalboden 23 stellt damit eine Abtropfkante dar, an der austretendes Fluid abtropfen kann, bevor es an den als Wassersperre dienenden Rand 15 gelangen kann.

Die in der äußeren Kanalwand 19 gebildeten Laschen weisen jeweils eine Aussparung 21 auf, die sich von der äußeren Kanalwand 19 in Richtung des Kanalbodens 22 erstreckt. Durch dieses Design ist sichergestellt, dass eine sichere Verrastung der Heizvorrichtung 1 mit dem Formteil 50 erfolgen kann.

In Figur 5 ist in einer Perspektivansicht der erfindungsgemäße Durchlauferhitzer 100 dargestellt, der die Heizvorrichtung 1 mit einem damit verbundenen Formteil 50 zeigt. Das Formteil 50, das beispielsweise aus einem Kunststoff besteht, weist eine Einlassöffnung 51 auf, welche radial orientiert ist. Weiterhin sind zwei Auslassöffnungen 52, die sich axial erstrecken, vorgesehen. Jede der Auslassöffnungen 52 kann mit einer separaten Sprühvorrichtung einer Geschirrspülmaschine verbunden werden. Die Anordnung der Einlassöffnung und der Auslassöffnungen kann natürlich auch an anderen als den in der Figur gezeigten Stellen erfolgen.

Aus der Perspektivdarstellung der Figur 5 ist weiterhin die Verrastung zwischen der Heizvorrichtung 1 und dem Formteil 50 ersichtlich. Die Verrastung erfolgt über die bereits erwähnten Laschen 20, in die Rasthaken 53 eingreifen, und die auch unter Druck ein Lösen des Formteils 50 von der Heizvorrichtung 1 verhindern. Aus der Darstellung ist nicht ersichtlich, dass zwischen dem Formteil 50 und der Heizvorrichtung 1 ein Dichtring angeordnet ist. Genauer wird der Dichtring zwischen einer sich in den Kanal 16 erstreckenden Wand des Formteiles und der inneren Kanalwand 18 angeordnet, wodurch auch unter Druck. d.h. unter einer möglichen Verformung, insbesondere des Formteils, aber auch der Heizvorrichtung, eine hohe Dichtigkeit sichergestellt ist.

Der im Inneren zwischen der Heizvorrichtung und dem Formteil gebildete Fluidraum weist keinerlei Strömungswiderstände auf, wie dies beispielsweise bei Rohrheizkörpern, die im Inneren eines Fluidraums liegen, der Fall ist. Aus diesem Grund kann bei einem erfindungsgemäßen Durchlauferhitzer die Pumpenleistung reduziert werden, da weniger Strömungsverluste auszugleichen sind. Mit einer kleineren Pumpe können Kosten eingespart werden. Andererseits können bei Beibehaltung der bislang verwendeten Pumpen höhere Drücke erzielt werden, so dass die mechanische Beaufschlagung eines Spülgutes vergrößert wird.

Der erfindungsgemäße Durchlauferhitzer weist insgesamt eine sehr geringe Teilezahl auf und lässt sich auf besonders einfache Weise herstellen. Insbesondere sind die zur Herstellung einer sicheren Dichtung notwendigen Maßnahmen sehr viel geringer, da lediglich ein einziger Dichtring zwischen der Heizvorrichtung und dem Formteil vorgesehen werden muss. Zur Feststellung eines Trockenlaufens müssen keine mechanisch durch das Fluid beaufschlagten Schalter mehr vorgesehen werden. Dies kann allein durch die vorgesehene Temperaturüberwachungseinrichtung außerhalb des Fluidraums festgestellt werden. Darüber hinaus vereinfacht sich wesentlich die elektrische Kontaktierung des erfindungsgemäßen Durchlauferhitzers mittels einer Kontaktiervorrichtung, die in elektrischem Kontakt mit allen elektrischen Verbrauchern steht.

## Patentansprüche

1. Heizvorrichtung (1) für Fluide zum Einbau in einen Durchlauferhitzer (100) mit zumindest einem als elektrische Widerstandsheizung ausgeführten Heizelement (2), mindestens einem Wärmeübertragungselement (3), das zum Übertragen der von dem Heizelement (2) erzeugten Wärme an das Fluid mit dem Heizelement (2) und dem Fluid in wärmeleitender Verbindung steht, wobei das Wärmeübertragungselement (3) einen integralen Gehäusebestandteil eines druck- und temperaturbeständigen Durchlauferhitzers bildet und einen im wesentlichen planaren Zentralbereich (4) aufweist, auf den das Heizelement (2) aufgebracht ist, **dadurch gekennzeichnet, dass** das Heizelement (2) aus einem Material mit positiver Temperaturcharakteristik (PTC) gebildet ist.

2. Heizvorrichtung nach Anspruch 1, **dadurch gekennzeichnet, dass** das Heizelement (2) eine Anzahl an elektrisch miteinander verbundenen Heizabschnitten (5) aufweist, die den Zentralbereich (4) im wesentlichen vollflächig bedecken, wobei ein Montagebereich (6) durch die Heizabschnitte ausgespart ist.

3. Heizvorrichtung nach Anspruch 2, **dadurch gekennzeichnet, dass** das Heizelement (2) durch elektrische Verbindung entsprechender Heizabschnitte (5) zumindest einen Heizkreis aufweist.

4. Heizvorrichtung nach einem der vorhergehenden Ansprüche, **dadurch gekennzeichnet, dass** eine auf dem Wärmeübertragungselement (3) angeordnete Temperaturüberwachungseinrichtung (8) vorgesehen ist, die mit dem Wärmeübertragungselement (3) gut wärmeleitend verbunden ist.

5. Heizvorrichtung nach Anspruch 4, **dadurch gekennzeichnet, dass** das Temperaturüberwachungselement (8) in dem Montagebereich (6) benachbart zu dem Heizelement (2) angeordnet ist.

6. Heizvorrichtung nach Anspruch 5 oder 6, **dadurch gekennzeichnet, dass** das Temperaturüberwachungselement (8) durch einen NTC-Widerstand gebildet ist.

7. Heizvorrichtung nach einem der vorhergehenden Ansprüche, **dadurch gekennzeichnet, dass** das Wärmeübertragungselement (3) aus einem Material besteht, das in lateraler Richtung eine schlechte Wärmeleitfähigkeit aufweist.

8. Heizvorrichtung nach einem der vorhergehenden Ansprüche, **dadurch gekennzeichnet, dass** eine auf dem Wärmeübertragungselement (3) angeordnete Kontaktiervorrichtung (9) vorgesehen ist, die mit den elektrischen Elementen der Heizvorrichtung elektrisch verbunden ist.

9. Heizvorrichtung nach Anspruch 8, **dadurch gekennzeichnet, dass** die Kontaktiervorrichtung (9) mit einem jeden Heizkreis des Heizelements (2) und der Temperaturüberwachungseinrichtung (8) elektrisch verbunden ist.

10. Durchlauferhitzer (100) mit einer Heizvorrichtung (1) nach einem der vorhergehenden Ansprüche und einem mit dieser formschlüssig druck- und temperaturfest verbundenen Formteil (50) zur Bildung eines Fluidraums, wobei das Formteil (50) zumindest eine Einlassöffnung (51) und zumindest eine Auslassöffnung (52) aufweist.

11. Durchlauferhitzer nach Anspruch 10, **dadurch gekennzeichnet, dass** das Temperaturüberwachungselement (8) auf dem Wärmeübertragungselement (3) der Heizvorrichtung (1) in einem Bereich angeordnet ist, der nahe der Einlassöffnung (51) in dem Formteil (50) gelegen ist.

## Claims

1. Heating device (1) for fluid for installation of a throughflow heater (100) with at least one heating element (2) constructed as an electrical resistance heater, at least one heat transmission element (3), which for transmission of the heat generated by the heating element (2) to the fluid is in thermally conductive connection with the heating element (2) and the fluid, wherein the heat transmission element (3) forms an integral housing component of a pressure-resistant and temperature-resistant throughflow heater and has a substantially planar central region (4) on which the heating element (2) is mounted, **characterised in that** the heating element (2) is formed from a material with positive temperature characteristic (PTC).

2. Heating device according to claim 1, **characterised in that** the heating element (2) comprises a plurality of heating sections (5) which are electrically connected together and cover the central region (4) over substantially the whole area, wherein a mounting region (6) is spared by the heating sections.

3. Heating device according to claim 2, **characterised in that** the heating element (2) comprises heating sections (5), which correspond by electrical connection, of at least one heating circuit.

4. Heating device according to any one of the preceding claims, **characterised in that** a temperature monitoring device (8), which is arranged on the heat transmission element (3) and which is in good thermally conductive connection with the heat transmission element (3), is provided.

5. Heating device according to claim 4, **characterised in that** the temperature monitoring element (9) is arranged in the mounting region (6) adjacent to the heating element (2).

6. Heating device according to claim 5 or 6, **characterised in that** the temperature monitoring element (8) is formed by an NTC resistance.

7. Heating device according to any one of the preceding claims, **characterised in that** the heat transmission element (3) consists of a material having a poor thermal conductivity in lateral direction.

8. Heating device according to any one of the preceding claims, **characterised in that** a contact-making device (9), which is arranged on the heat transmission element (3) and is electrically connected with the electrical elements of the heating device, is provided.

9. Heating device according to claim 8, **characterised in that** the contact-making device (9) is electrically connected with each heating circuit of the heating element (2) and the temperature monitoring device (8).

10. Throughflow heater (100) with a heating device (1) according to any one of the preceding claims and a shaped part (50), which is mechanically positively connected therewith in pressure-resistant and temperature-resistant manner, for formation of a fluid chamber, wherein the shaped part (50) has at least one inlet opening (51) and at least one outlet opening (52).

11. Throughflow heater according to claim 10, **characterised in that** the temperature monitoring element (8) is arranged on the heat transmission element (3) of the heating device (1) in a region disposed in the vicinity of the inlet opening (51) in the shaped part (50).

## Revendications

1. Dispositif de chauffage (1) pour des fluides destiné à être intégré dans un chauffe-eau instantané (100), comprenant au moins un élément chauffant (2) exécuté en tant que chauffage à résistance électrique, au moins un élément de transfert de chaleur (3) qui est en liaison thermoconductrice avec l'élément chauffant (2) et le fluide pour transférer la chaleur produite par l'élément chauffant (2) au fluide, l'élément de transfert de chaleur (3) formant une partie d'un boîtier intégral d'un chauffe-eau instantané résistant à la pression et à la température et présentant une zone centrale (4) essentiellement plane sur laquelle est installé l'élément chauffant (2), **caractérisé en ce que** l'élément chauffant (2) est formé d'un matériau doté d'une caractéristique de température positive (PTC).

2. Dispositif de chauffage selon la revendication 1, **caractérisé en ce que** l'élément chauffant (2) comprend un nombre de segments chauffants (5) reliés électriquement les uns aux autres qui couvrent essentiellement toute la surface de la zone centrale (4), une zone de montage (6) étant ménagée à travers les segments chauffants.

3. Dispositif de chauffage selon la revendication 2, **caractérisé en ce que** l'élément chauffant (2) présente au moins un circuit chauffant grâce à une liaison électrique de segments chauffants (5) correspondants.

4. Dispositif de chauffage selon l'une des revendications précédentes, **caractérisé en ce que** l'on prévoit un dispositif de contrôle de température (8) situé sur l'élément de transfert de chaleur (3), qui est relié de façon parfaitement thermoconductrice à l'élément de transfert de chaleur (3).

5. Dispositif de chauffage selon la revendication 4, **caractérisé en ce que** l'élément de contrôle de température (8) est disposé au voisinage de l'élément chauffant (2) dans la zone de montage (6).

6. Dispositif de chauffage selon la revendication 5 ou 6, **caractérisé en ce que** l'élément de contrôle de température (8) est formé par une résistance NTC.

7. Dispositif de chauffage selon l'une des revendications précédentes, **caractérisé en ce que** l'élément de transfert de chaleur (3) est formé d'un matériau qui possède une mauvaise conductivité thermique dans une direction latérale.

8. Dispositif de chauffage selon l'une des revendications précédentes, **caractérisé en ce que** l'on prévoit un dispositif de contact (9) situé sur l'élément de transfert de chaleur (3), qui est relié électriquement aux éléments électriques du dispositif de chauffage.

9. Dispositif de chauffage selon la revendication 8, **caractérisé en ce que** le dispositif de contact (9) est relié électriquement à chaque circuit chauffant de l'élément chauffant (2) et au dispositif de contrôle de température (8).

10. Chauffe-eau instantané (100) comprenant un dispositif de chauffage (1) selon l'une des revendications précédentes et une pièce moulée (50) reliée à celui-ci par conjugaison de forme d'une manière résistante à la pression et à la température pour former un compartiment de fluide, la pièce moulée (50) étant pourvue d'au moins une ouverture d'entrée (51) et d'au moins une ouverture de sortie (52).

11. Chauffe-eau instantané selon la revendication 10, **caractérisé en ce que** l'élément de contrôle de température (8) est situé sur l'élément de transfert de chaleur (3) du dispositif de chauffage (1) dans une zone située près de l'ouverture d'entrée (51) dans la pièce moulée (50).
